# EUROPEAN PATENT APPLICATION

(11) **EP 2 136 298 A1**
(43) Date of publication of application: **23.12.2009**
(21) Application number: 08738555.5
(22) Date of filing: 10.04.2008
(51) Int. Cl.: G06F 12/00, G06F 1/04, G06F 1/12, G06F 1/32, G06F 12/06

(54) **DATA SAVING SYSTEM, DATA RETURNING SYSTEM, DATA SAVING METHOD AND DATA RETURNING METHOD**

(30) Priority: 11.04.2007 JP 2007103955
(71) Applicant: Panasonic Corporation, Kadoma-shi Osaka 571-8501 (JP)
(72) Inventor: YAMAGUCHI, Takashi, Osaka 540-6207 (JP); SEKIBE, Tsutomu, Osaka 540-6207 (JP)
(74) Representative: Grünecker, Kinkeldey, Stockmair & Schwanhäusser Anwaltssozietät
(86) International application number: PCT/JP2008/000949
(87) International publication number: WO 2008/126418

(57) **Abstract**

A data store system and a data restoration system that can decrease power consumed in data store-processing or data restoration are provided.

A data transfer system includes a function block having store data; a storage section for storing the store data transferred from the function block; a bus having a bit width of a predetermined number of bits where the function block and the storage section are connected; and a controller for sending a store period clock to the function block and the storage section at the data store-processing and sending a restoration period clock to the function block and the storage section at the data restoration. In synchronization with the store period clock, the function block sends store data a predetermined number of bits at a time within the bit width of the bus to the bus and the storage section stores the store data sent in sequence from the function block through the bus. In synchronization with the restoration period clock, and the storage section sends the stored store data as many bits as the bit width of the bus at a time to the bus, and the function block reads the store data a predetermined number of bits at a time from the bus.

## Description

### Technical Field

This invention relates to a data store system and a data store method for performing data store-processing and a data restoration system and a data restoration method for performing data restoration-processing.

### Background Art

To reduce power consumption of a system LSI, a technique of shutting off power supply to a function module which need not operate is available. According to this technique, to ensure the normal operation after power is again supplied, necessary data in the function module is temporarily stored and when the operation is resumed, the data is restored to the function module. Generally, the data is stored and restored using a DMA controller (DMAC).

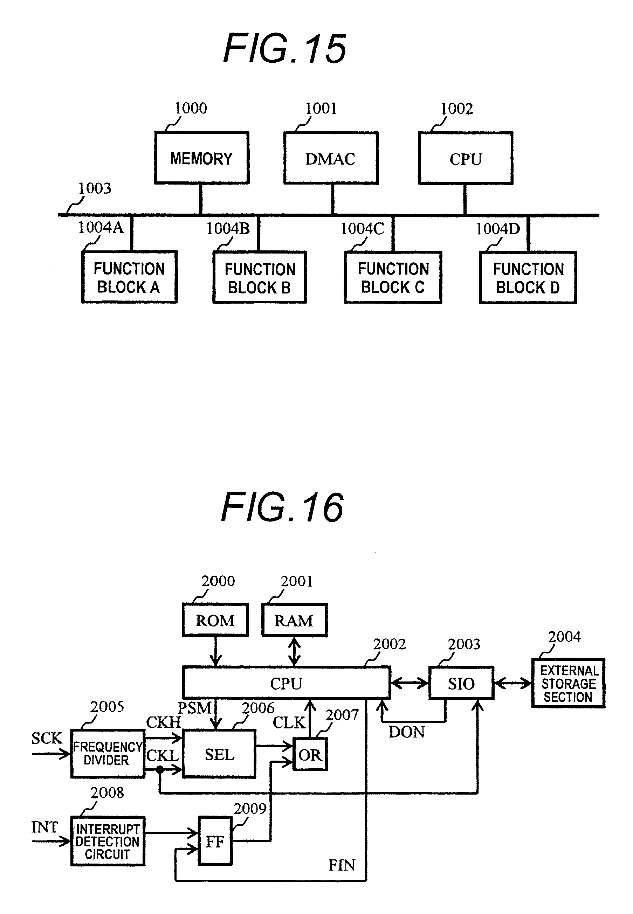

FIG. 15 is a block diagram to show a system for storing and restoring data using a DMAC. According to the system shown in FIG. 15, to store data, a CPU 1002 previously makes transfer setting of a DMAC 1001 and the DMAC 1001 reads the data to be stored from a function block and writes the data into memory 1000.

To reduce power consumed for storing the data described above, a system LSI disclosed in patent document 1 decreases the clock frequency at the data store. FIG. 16 is a block diagram to show the system LSI disclosed in patent document 1. The system LSI shown in FIG. 16 includes a frequency divider 2005 for dividing a high-speed clock and generating a low-speed clock and a selector 2006 for selecting one of the clocks. The system LSI operates on the high-speed clock in a normal mode; when a transition is made to a low power consumption mode, the clock is switched from the high-speed clock to the low-speed clock and data is stored using the low-speed clock and then power supply is shut off. When a transition is made to the normal mode, power supply is restarted and the data is restored and then the clock is switched from the low-speed clock to the high-speed clock. Thus, the data is stored using the low-speed clock, thereby reducing power consumption.

Patent document 1: JP-2006-323469A

### Disclosure of the Invention

### Problems to be Solved by the Invention

In the system LSI shown in FIG. 16 described above, power supply to each function block cannot be shut off until the data store is complete. Thus, although the data is stored using the low-speed clock, the power consumed while the clock speed is changed for storing the data and the data is stored cannot radically be reduced. If it takes a long time in storing the data, the power consumption increases. Further, if the number of function blocks requiring data store is large, the power consumption increases.

It is an object of the invention to provide a data store system that can decrease power consumed in data store-processing performed when power supply to a function block is shut off and a data restoration system that can decrease power consumed in data restoration-processing performed when power supply to a function block is restarted and a data store method and a data restoration method.

### Means For Solving the Problems

The invention provides a data store system including: at least one function block having store data to be stored; a storage section for storing the store data transferred from the function block; a bus having a bit width of a predetermined number of bits where the function block and the storage section are connected; and a controller for sending a store period clock to the function block and the storage section when the store data is to be transferred from the function block to the storage section, wherein the function block includes: a first data-retention section for retaining the store data; and a first store-processing controller for reading the store data a predetermined number of bits at a time within the bit width of the bus from the first data-retention section in synchronization with the store period clock, and sending the read store data to a line of the bus assigned to each function block, and wherein the storage section includes: a second data-retention section for retaining the store data transferred from the function block through the bus; and a second store-processing controller for reading the store data from the bus in synchronization with the store period clock, and storing the read store data in the second data-retention section.

The invention also provides a data restoration system including: at least one function block; a storage section for storing restoration data required for the function block to resume the operation; a bus having a bit width of a predetermined number of bits where the function block and the storage section are connected; and a controller for sending a restoration period clock to the function block and the storage section when the restoration data stored in the storage section is to be transferred to the function block, wherein the storage section includes: a first data-retention section for retaining the restoration data; and a first restoration-processing controller for reading the restoration data from the first data-retention section in synchronization with the restoration period clock, and sending the read restoration data to a line of the bus assigned to each function block, and wherein the function block includes: a second data-retention section for retaining the restoration data transferred from the storage section through the bus; and a second restoration-processing controller for reading the restoration data a predetermined number of bits at a time from a predetermined line of the bus assigned to each function block in synchronization with the restoration period clock, and storing the read restoration data in the second data-retention section.

The invention also provides a data store method performed by a data store system including: at least one function block having store data to be stored; a storage section for storing the store data transferred from the function block; a bus having a bit width of a predetermined number of bits where the function block and the storage section are connected; and a controller for sending a store period clock to the function block and the storage section when the store data is to be transferred from the function block to the storage section, wherein the data store method includes: sending by the controller the store period clock to the function block and the storage section, sending by the function block the store data a predetermined number of bits at a time within the bit width of the bus to a line of the bus assigned to each function block in synchronization with the store period clock, and reading by the storage section the store data from the bus in synchronization with the store period clock, and storing the read store data.

Further, the invention also provides a data restoration method performed by a data restoration system including: at least one function block; a storage section for storing restoration data required for the function block to resume the operation; a bus having a bit width of a predetermined number of bits where the function block and the storage section are connected; and a controller for sending a restoration period clock to the function block and the storage section when the restoration data stored in the storage section is to be transferred to the function block, wherein the data restoration method includes: sending by the controller the restoration period clock to the function block and the storage section, sending by the storage section the restoration data to a line of the bus assigned to each function block in synchronization with the restoration period clock, and reading by the function block the restoration data a predetermined number of bits at a time from a predetermined line of the bus assigned to each function block in synchronization with the restoration period clock, and storing the read restoration data.

### Advantages of the Invention

According to the data store system, the data restoration system, the data store method, and the data restoration method according to the invention, data store and data restoration are performed quickly, so that power consumed in data store-processing performed when power supply to a function block is shut off or in data restoration-processing performed when power supply to a function block is restarted can be decreased.

### Brief Description of the Drawings

FIG. 1 is a block diagram to show a data transfer system according to a first embodiment of the invention.
FIG. 2 is a time chart when the data transfer system according to the first embodiment performs (a) data store-processing and (b) data restoration-processing.
FIG. 3 is a block diagram to show a data transfer system according to a second embodiment of the invention.
FIG. 4 is a time chart when the data transfer system according to the second embodiment performs (a) data store-processing and (b) data restoration-processing.
FIG. 5 is a block diagram to show a data transfer system according to a third embodiment of the invention.
FIG. 6 is a time chart when the data transfer system according to the third embodiment performs (a) data store-processing and (b) data restoration-processing.
FIG. 7 is a block diagram to show a data store system according to a fourth embodiment of the invention.
FIG. 8 is a time chart when the data store system according to the fourth embodiment performs data store-processing.
FIG. 9 is a block diagram to show a data restoration system according to a fifth embodiment of the invention.
FIG. 10 is a time chart when the data restoration system according to the fifth embodiment performs data restoration-processing.
FIG. 11 is a block diagram to show a data store system according to a sixth embodiment of the invention.
FIG. 12 is a time chart when the data store system according to the sixth embodiment performs data store-processing.
FIG. 13 is a block diagram to show a data restoration system according to a seventh embodiment of the invention.
FIG. 14 is a time chart when the data restoration system according to the seventh embodiment performs data restoration-processing.
FIG. 15 is a block diagram to show a system for storing and restoring data using a DMAC.
FIG. 16 is a block diagram to show a system LSI disclosed in patent document 1.

### Description of Reference Numerals

- 10, 11: Clock controller
- 20A-20D, 21A-21D: Function block
- 201A-201D, 211A-211D: Data-retention section
- 202A-202D, 212A-212D: Store-processing controller
- 203A-203D, 213A-213D: Restoration-processing controller
- 3: Bus
- 40: Storage section
- 401: Store-processing controller
- 402: Restoration-processing controller
- 403: Data-retention section
- 7: Bit width setting section
- 101, 201: Clock generation source
- 102: Store controller
- 103, 203: Bus
- 107: Store-processing setting section
- 120A-120D, 220A-220D, 320A-320D, 420A-420D: Function block
- 121A-121D, 221A-221D, 321A-321D, 421A-421D: Data-retention section
- 122A-122D, 322A-322D: Store-processing controller
- 123A-123D: Store-processing setting section
- 140, 240: Storage section
- 141: Store-processing controller
- 142, 242: Data-retention section
- 202: Restoration controller
- 207: Restoration-processing setting section
- 222A-222D, 422A-422D: Restoration-processing controller
- 223A-223D: Restoration-processing setting section
- 241: Restoration-processing controller
- 1000: Memory
- 1001: DMAC
- 1002: CPU
- 1003: Bus
- 1004A-1004D: Function block
- 2000: ROM
- 2001: RAM
- 2002: CPU
- 2003: SIO
- 2004: External storage section
- 2005: Frequency divider
- 2006: SEL
- 2007: OR
- 2008: Interrupt detection circuit
- 2009: FF

### Best Mode for Carrying out the Invention

Embodiments of the invention will be discussed with reference to the accompanying drawings.

### (First embodiment)

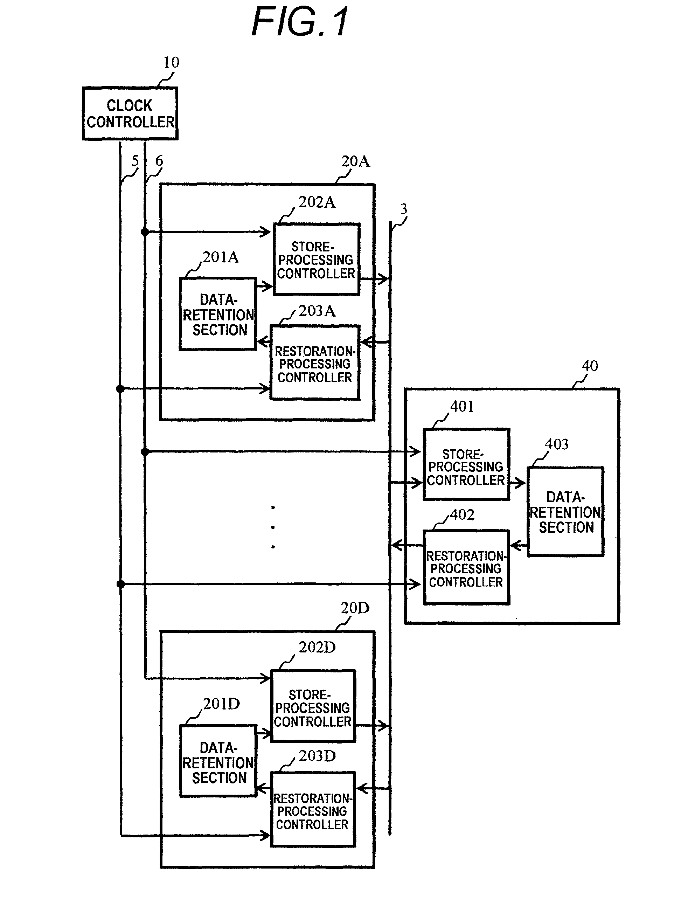

FIG. 1 is a block diagram to show a data transfer system of a first embodiment of the invention. As shown in FIG. 1, the data transfer system of the first embodiment installed on a system LSI includes a clock controller 10, function blocks 20A to 20D, a bus 3, and a storage section 40. The function blocks 20A to 20D have data-retention sections 201A to 201 D, store-processing controllers 202A to 202D, and restoration-processing controllers 203A to 203D. The storage section 40 has a store-processing controller 401, a restoration-processing controller 402, and a data-retention section 403. In the example shown in FIG. 1, the storage section 40 has one data-retention section 403, but may have a plurality of data-retention sections 403.

In the embodiment, the case where the clock controller 10 is used as an example of controller is shown. The case where the data-retention sections 201A to 201 D that the function blocks 20A to 20D have respectively are used as an example of second data-retention section is shown. The case where the store-processing controllers 202A to 202D that the function blocks 20A to 20D have respectively are used as an example of first store-processing controller is shown. The case where the restoration-processing controllers 203A to 203D that the function blocks 20A to 20D have respectively are used as an example of second restoration-processing controller is shown. The case where the data-retention section 403 that the storage section 40 has is used as an example of first data-retention section is shown. The case where the store-processing controller 401 that the storage section 40 has is used as an example of second store-processing controller is shown. Further, the case where the restoration-processing controller 402 that the storage section 40 has is used as an example of first restoration-processing controller is shown.

When data store-processing is performed, the clock controller 10 sends a store clock 6 to the function blocks 20A to 20D and the storage section 40. In the embodiment, the store clock 6 is used as an example of store period clock. When data restoration-processing is performed, the clock controller 10 sends a restoration clock 5 to the function blocks 20A to 20D and the storage section 40. The restoration clock 5 is used as an example of restoration period clock.

Each of the data-retention sections 201A to 201D that the function blocks 20A to 20D have is a record medium of a register, etc. The data-retention sections 201A to 201 D store data which needs to be stored in the storage section 40 (which will be hereinafter referred to as "store data") when power supply to the function block which need not operate is shut off. When the store clock 6 is sent from the clock controller 10, the store-processing controllers 202A to 202D that the function blocks 20A to 20D have read the store data a predetermined number of bits at a time from the data-retention sections 201A to 201 D in synchronization with the store clock 6 and send the data to lines of the bus 3 assigned to the function blocks. When the restoration clock 5 is sent from the clock controller 10, the restoration-processing controllers 203A to 203D that the function blocks 20A to 20D have read the store data a predetermined number of bits at a time from the lines of the bus 3 assigned to the function blocks in synchronization with the restoration clock 5 and write the data into the data-retention sections 201A to 201 D.

The bus 3 is a data transfer bus connected to the function blocks 20A to 20D and the storage section 40 and having a bit width of 32 bits. When data store-processing or data restoration-processing is performed, eight bits of the line of the 0th bit to the seventh bit of the bus 3 are assigned to the function block 20A, eight bits of the line of the eighth to 15th bits are assigned to the function block 20B, eight bits of the line of the 16th to 23rd bits are assigned to the function block 20C, and eight bits of the line of the 24th to 31st bits are assigned to the function block 20D.

The data-retention section 403 that the storage section 40 has is a nonvolatile record medium. The 32-bit store data sent in sequence from the function blocks 20A to 20D through the bus 3 is stored in the data-retention section 403. When the store clock 6 is sent from the clock controller 10, the store-processing controller 401 that the storage section 40 has writes the 32-bit store data transferred on the bus 3 into the data-retention section 403 in sequence in synchronization with the store clock 6. When the restoration clock 5 is sent from the clock controller 10, the restoration-processing controller 402 that the storage section 40 has reads the store data written by the store-processing controller 401 32 bits at a time from the data-retention section 403 in synchronization with the restoration clock 5 and sends the store data to the bus 3.

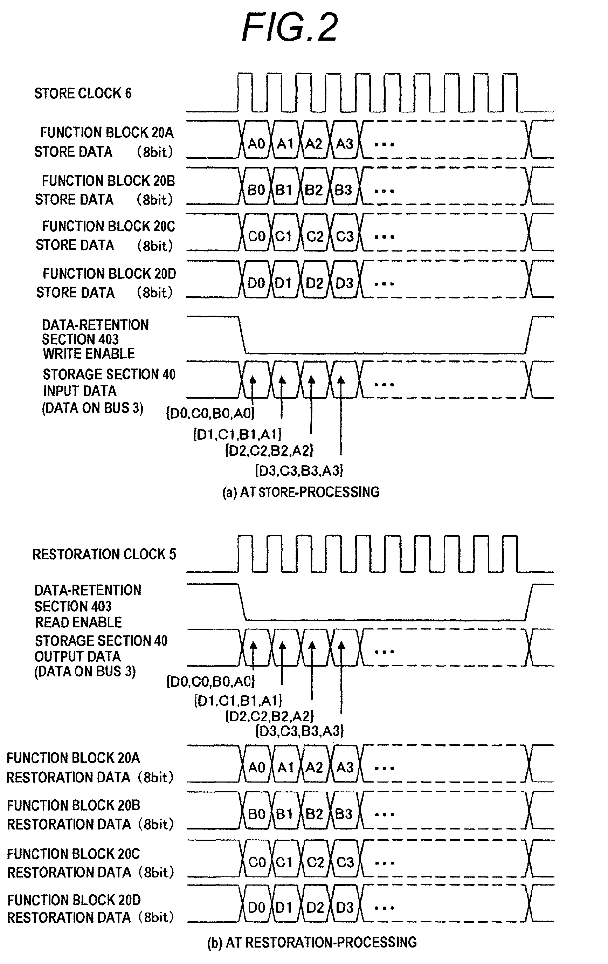

FIG. 2 is a time chart when the data transfer system of the first embodiment performs (a) data store-processing and (b) data restoration-processing. The data store-processing performed by the data transfer system of the first embodiment will be discussed below: When the clock controller 10 determines execution of data store-processing, the clock controller 10 sends a store clock 6 to the function blocks 20A to 20D and the storage section 40. The store-processing controllers 202A to 202D of the function blocks 20A to 20D detecting the store clock 6 read eight-bit store data in parallel sequentially from the data-retention sections 201A to 201 D respectively in synchronization with the store clock 6 and send the store data to the bus 3. The store-processing controller 401 of the storage section 40 detecting the store clock 6 sets a write enable signal for permitting or prohibiting write into the data-retention section 403 to enable (i.e., permission) and writes the 32-bit store data received in sequence from the bus 3 into the data-retention section 403 in synchronization with the store clock 6.

Next, the data restoration-processing performed by the data transfer system of the first embodiment will be discussed. When the clock controller 10 determines execution of data restoration-processing, the clock controller 10 sends a restoration clock 5 to the function blocks 20A to 20D and the storage section 40. The restoration-processing controller 402 of the storage section 40 detecting the restoration clock 5 sets a read enable signal for permitting or prohibiting read from the data-retention section 403 to enable (i.e., permission) and reads the store data 32 bits at a time from the data-retention section 403 in synchronization with the restoration clock 5 and sends the store data to the bus 3. The restoration-processing controllers 203A to 203D of the function blocks 20A to 20D detecting the restoration clock 5 sequentially read the data transferred on the bus 3 in synchronization with the restoration clock 5 and write the data into the data-retention sections 201A to 201D.

As described above, according to the data transfer system of the embodiment, without providing a new store-processing dedicated bus and a new restoration-processing dedicated bus respectively, while a store clock and a restoration clock are sent to each function block connected to the bus 3, the bus 3 used in usual transfer is used as a store-processing dedicated bus and a restoration-processing dedicated bus. The store data is sent from each function block directly to the storage section 40 through the bus 3, whereby the data store-processing is performed and likewise, data for restoration is sent from the storage section 40 directly to each function block through the bus 3, whereby the data restoration-processing is performed. Thus, processing of transfer setting, etc., required so far is not performed and data transfer between the function blocks and the storage section 40 is executed without intervention of any other block of a DMAC, etc., so that data store and data restoration are performed quickly as compared with conventional processing. The data store and the data restoration are performed quickly and the previously required processing and the data transfer between the function blocks and the storage section 40 are simplified, so that the power consumed in the data store and the data restoration is decreased.

According to the data transfer system of the embodiment, if more than one function block for performing data store-processing or data restoration-processing exists, the data transfer processing or the data restoration-processing of each function block is performed in parallel and thus overhead of switching the function block for performing the data store-processing does not exist. Therefore, data store or data restoration is performed quickly. Thus, if more than one function block for performing data store-processing or data restoration-processing exists, data store and data restoration are performed quickly, so that the power consumed in the data store and the data restoration is decreased.

### (Second embodiment)

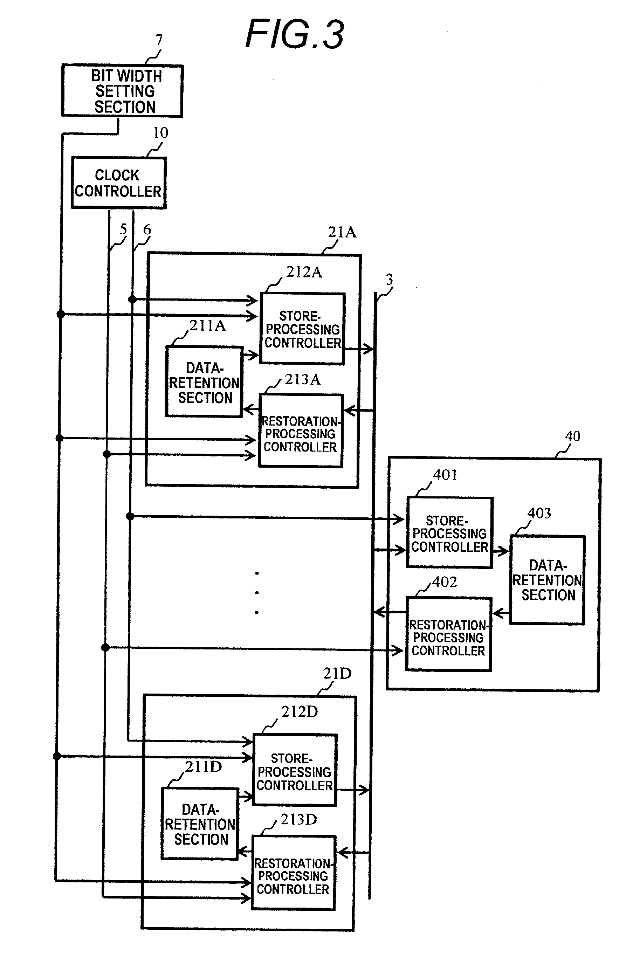

FIG. 3 is a block diagram to show a data transfer system of a second embodiment of the invention. The data transfer system of the second embodiment differs from the data transfer system of the first embodiment in that it includes a bit width setting section 7. Also, the data transfer system of the second embodiment includes function blocks 21A to 21D in place of the function blocks 20A to 20D. Other points are similar to those of the first embodiment; components common to those in FIG. 1 are denoted by the same reference numerals in FIG. 3 and will not be discussed again.

In the second embodiment, the case where the bit width setting section 7 is used as an example of bus assignment setting section is shown. The case where data-retention sections 211A to 211 D that the function blocks 21A to 21D have respectively are used as an example of first data-retention section and second data-retention section is shown. The case where store-processing controllers 212A to 212D that the function blocks 21A to 21 D have respectively are used as an example of first store-processing controller is shown. The case where restoration-processing controllers 213A to 213D that the function blocks 21A to 21 D have respectively are used as an example of second restoration-processing controller is shown.

The bit width setting section 7 sets assignment of the bit width for each function block on a bus 3 for transferring data between the function blocks 21A to 21 D and a storage section 40 when data store-processing and data restoration-processing are performed. That is, for each function block, the bit width setting section 7 sets the number of bits of store data sent to the bus 3 every clock cycle of a store clock 6 by the store-processing controller of each function block and the number of bits of store data read from the bus 3 every clock cycle of a restoration clock 5 by the restoration-processing controller of each function block.

The assignment of the bit width for each function block is uniquely determined by bit width setting information. For example, if the bit width setting information is "1," 16 bits of the line of the 0th bit to the 15th bit of the bus 3 are assigned to the function block 21A, eight bits of the line of the 16th to 23rd bits are assigned to the function block 21 B, four bits of the line of the 24th to 28th bits are assigned to the function block 21C, and four bits of the line of the 29th to 31 st bits are assigned to the function block 21 D.

The function blocks 21A to 21 D of the embodiment have data-retention sections 211A to 211D, store-processing controllers 212A to 212D, and restoration-processing controllers 213A to 213D. Each of the data-retention sections 211A to 211D is a record medium of a register, etc. The data-retention sections 211A to 211D store data which needs to be stored in the storage section 40 (store data) when power supply is shut off. When the store clock 6 is sent from a clock controller 10, the store-processing controllers 212A to 212D read the bit width setting information from the bit width setting section 7 and read the store data as many bits as the number of bits responsive to the bit width setting information at a time from the data-retention sections 211A to 211 D in synchronization with the store clock 6 and send the data to the lines of the bus 3 assigned to the function blocks. When the restoration clock 5 is sent from the clock controller 10, the restoration-processing controllers 213A to 213D read the bit width setting information from the bit width setting section 7 and read the store data as many bits as the number of bits responsive to the bit width setting information at a time from the lines of the bus 3 assigned to the function blocks in synchronization with the restoration clock 5 and write the data into the data-retention sections 211A to 211D.

The bus 3 is a data transfer bus of a 32-bit width connected to the function blocks 21A to 21D and the storage section 40 and having. When data store-processing and data restoration-processing are performed, a part of the bus 3 of the 32-bit width is assigned to the function block 21A, another part is assigned to the function block 21 B, another part is assigned to the function block 21C, and another part is assigned to the function block 21D in accordance with the bit width setting information set by the bit width setting section 7.

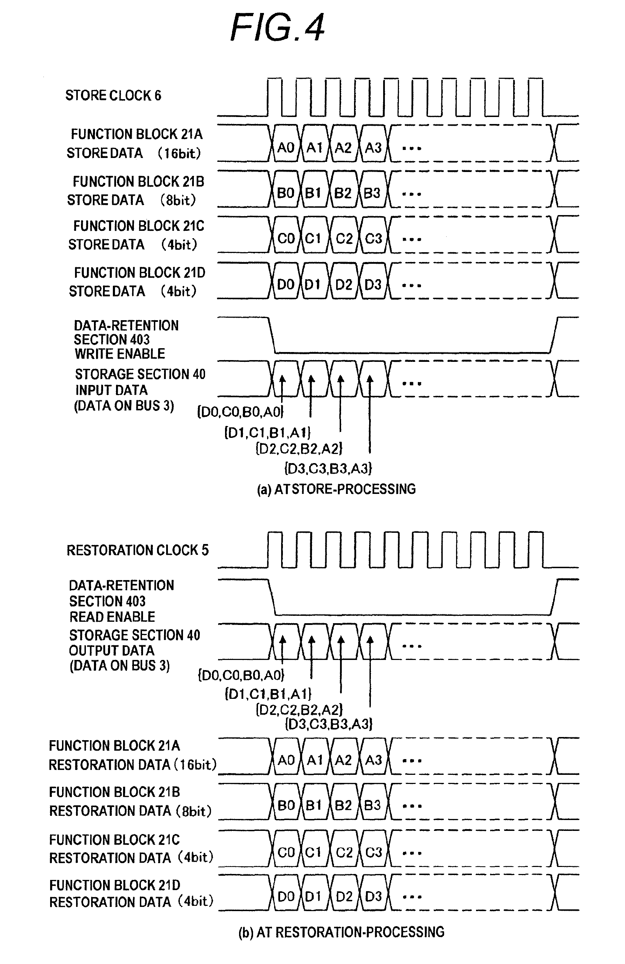

FIG. 4 is a time chart when the data transfer system of the second embodiment performs (a) data store-processing and (b) data restoration-processing. The data store-processing performed by the data transfer system of the second embodiment will be discussed below: Before data store-processing is executed, assignment of the bit width of the bus 3 for each function block is set in the bit width setting section 7. When the clock controller 10 determines execution of data store-processing, the clock controller 10 sends a store clock 6 to the function blocks 21A to 21D and the storage section 40. The store-processing controllers 212A to 212D of the function blocks 21A to 21D detecting the store clock 6 read the bit width setting information from the bit width setting section 7 and read the store data as many bits as the number of bits responsive to the bit width setting information in parallel sequentially from the data-retention sections 211A to 211D respectively in synchronization with the store clock 6 and send the store data to the bus 3.
In the example shown in FIG. 4 (a), the store-processing controllers 212A to 212D sequentially read 16-bit data from the data-retention section 211A, eight-bit data from the data-retention section 211 B, four-bit data from the data-retention section 211C, and four-bit data from the data-retention section 211 D, respectively. A store-processing controller 401 of the storage section 40 detecting the store clock 6 sets a write enable signal for permitting or prohibiting write into the data-retention section 403 to enable (i.e., permission) and writes the 32-bit store data received in sequence from the bus 3 into the data-retention section 403 in synchronization with the store clock 6.

Next, the data restoration-processing performed by the data transfer system of the second embodiment will be discussed. When the clock controller 10 determines execution of data restoration-processing, the clock controller 10 sends a restoration clock 5 to the function blocks 21A to 21 D and the storage section 40. A restoration-processing controller 402 of the storage section 40 detecting the restoration clock 5 sets a read enable signal for permitting or prohibiting read from the data-retention section 403 to enable (i.e., permission) and reads the store data 32 bits at a time from the data-retention section 403 in synchronization with the restoration clock 5 and sends the store data to the bus 3. The restoration-processing controllers 213A to 213D of the function blocks 21A to 21D detecting the restoration clock 5 read the bit width setting information from the bit width setting section 7 and sequentially read the data as many bits as the number of bits responsive to the bit width setting information, of the data transferred on the bus 3 in synchronization with the restoration clock 5 and write the data into the data-retention sections 211A to 211D. In the example shown in FIG. 4 (b), the restoration-processing controllers 213A to 213D write the 16-bit data of the 0th bit to the 15th bit of the bus 3 into the data-retention section 211A, writes the eight-bit data of the 16th to 23rd bits into the data-retention section 211 B, write the four-bit data of the 24th to 28th bits into the data-retention section 211C, and write the four-bit data of the 29th to 31 st bits into the data-retention section 211 D, respectively.

As described above, according to the data transfer system of the embodiment, the bit width on the bus 3 assigned to each function block can be adjusted in response to the data size of the store data of the function block. Therefore, if the data size of the store data varies from one function block to another, setting can be made so that the time required for data store and data restoration of the two or more function blocks becomes the shortest.

In the embodiment, the bit width on the bus 3 for each function block is set in the bit width setting section 7 as the bit width setting information (see paragraph [0024]), but the bit width may be directly set for each function block without using the bit width setting information.

### (Third embodiment)

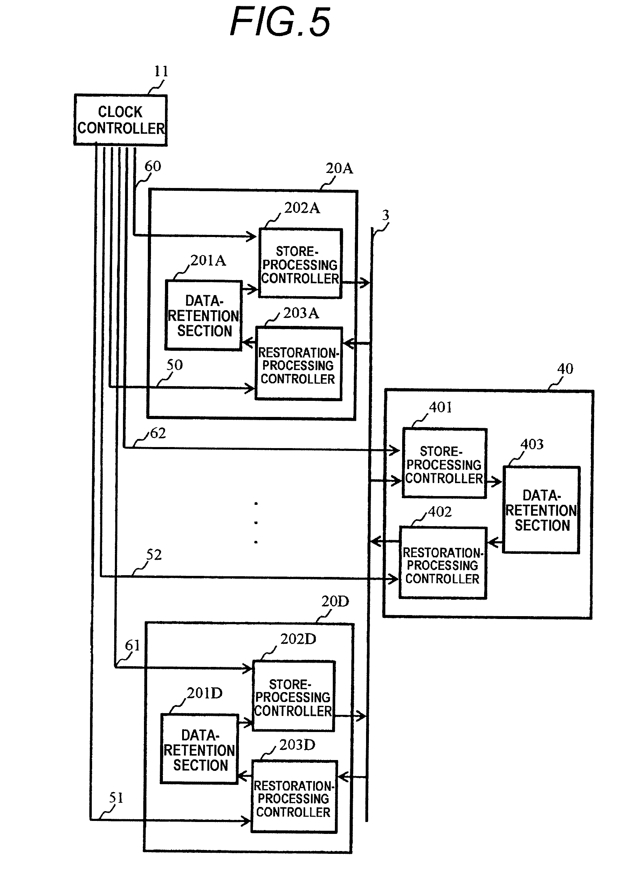

FIG. 5 is a block diagram to show a data transfer system of a third embodiment of the invention. The data transfer system of the third embodiment differs from the data transfer system of the first embodiment in that it includes a clock controller 11 in place of the clock controller 10. Other points are similar to those of the first embodiment and therefore components common to those in FIG. 1 are denoted by the same reference numerals in FIG. 5 and will not be discussed again.

In the first embodiment, the common store clock 6 and the common restoration clock 5 are sent from the clock controller 10 to the function blocks 20A to 20D and the storage section 40; in the third embodiment, however, a store clock 60 and a restoration clock 50 sent to function blocks 20A and 20B, a store clock 61 and a restoration clock 51 sent to function blocks 20C and 20D, and a store clock 62 and a restoration clock 52 sent to a storage section 40 differ from each other. That is, when data store-processing is performed, the clock controller 11 of the embodiment sends the store clock 60 to the function blocks 20A and 20B, sends the store clock 61 to the function blocks 20C and 20D, and sends the store clock 62 to the storage section 40. The sending timing of the store clock 60 and the sending timing of the store clock 61 differ and the sending time of one store clock and that of the other store clock do not overlap. However, the store clock 62 is sent during the sending time of the store clock 60 and the sending time of the store clock 61. When data restoration-processing is performed, the clock controller 11 of the embodiment sends the restoration clock 50 to the function blocks 20A and 20B, sends the restoration clock 51 to the function blocks 20C and 20D, and sends the restoration clock 52 to the storage section 40. The sending timing of the restoration clock 50 and the sending timing of the restoration clock 51 differ and the sending time of one restoration clock and that of the other restoration clock do not overlap.
However, the restoration clock 52 is sent during the sending time of the restoration clock 50 and the sending time of the restoration clock 51.

Each of the function blocks 20A to 20D and the storage section 40 operates in a similar manner to that of the firs embodiment in response to the sent store clock or restoration clock. That is, when detecting the store clock 60 or the restoration clock 50, the function blocks 20A and 20B perform similar operation to that of the first embodiment, when detecting the store clock 61 or the restoration clock 51, the function blocks 20C and 20D perform similar operation to that of the firs embodiment, and when detecting the store clock 62 or the restoration clock 52, the storage section 40 performs similar operation to that of the firs embodiment.

When data store-processing or data restoration-processing is executed in the third embodiment, 16 bits of the line of the 0th bit to the 15th bit of a bus 3 are assigned to each of the function blocks 20A and 20B and 16 bits of the line of the 16th bit to the 31st bit are assigned to each of the function blocks 20C and 20D.

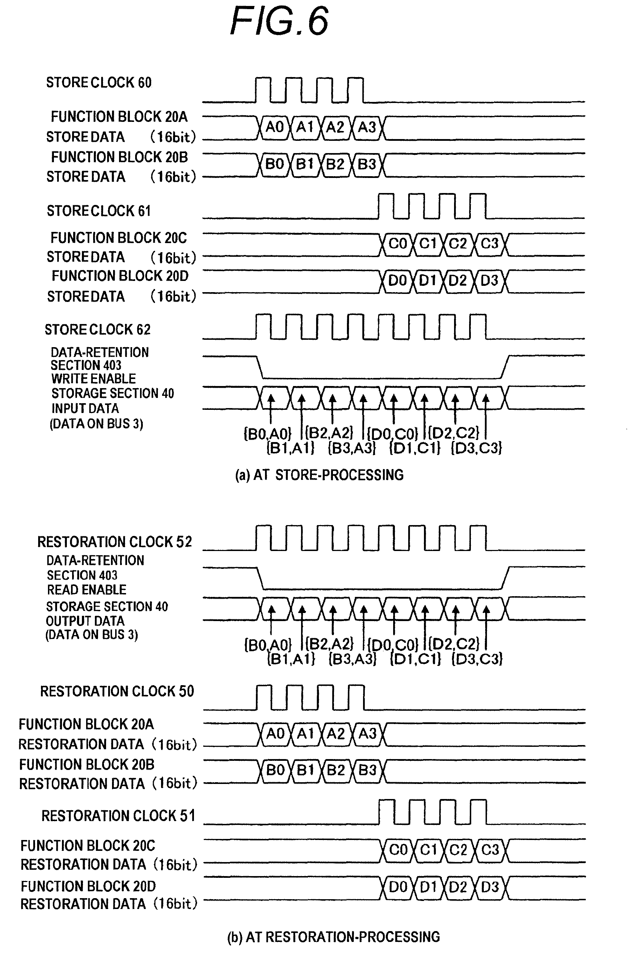

FIG. 6 is a time chart when the data transfer system of the third embodiment performs (a) data store-processing and (b) data restoration-processing. The data store-processing performed by the data transfer system of the third embodiment will be discussed below: When the clock controller 11 determines execution of data store-processing, the clock controller 11 sends a store clock 60 to the function blocks 20A and 20B and sends a store clock 62 to the storage section 40. The store-processing controllers 202A and 202B of the function blocks 20A and 20B detecting the store clock 60 sequentially read 16-bit store data and 16-bit store data in parallel from the data-retention sections 201A and 201 B respectively in synchronization with the store clock 60 and send the store data to the bus 3. A store-processing controller 401 of the storage section 40 detecting the store clock 62 sets a write enable signal for permitting or prohibiting write into a data-retention section 403 to enable (i.e., permission) and writes the 32-bit store data received in sequence from the bus 3 into the data-retention section 403 in synchronization with the store clock 62.

After data store completion of the function blocks 20A and 20B, the clock controller 11 stops sending the store clock 60 to the function blocks 20A and 20B and immediately afterward, sends a store clock 61 to the function blocks 20C and 20D. Although sending the store clock 60 to the function blocks 20A and 20B is stopped, sending the store clock 62 to the storage section 40 is continued. The store-processing controllers 202C and 202D of the function blocks 20C and 20D detecting the store clock 61 sequentially read 16-bit store data and 16-bit store data in parallel from the data-retention sections 201C and 201 D respectively in synchronization with the store clock 61 and send the store data to the bus 3. The store-processing controller 401 of the storage section 40 remains in detection of the store clock 62 and thus writes the 32-bit store data received in sequence from the bus 3 into the data-retention section 403 in synchronization with the store clock 62 with the write enable signal set to enable.

Next, the data restoration-processing performed by the data transfer system of the third embodiment will be discussed. When the clock controller 11 determines execution of data restoration-processing, the clock controller 11 sends a restoration clock 50 to the function blocks 20A to 20B and sends a restoration clock 52 to the storage section 40. A restoration-processing controller 402 of the storage section 40 detecting the restoration clock 52 sets a read enable signal for permitting or prohibiting read from the data-retention section 403 to enable (i.e., permission) and reads the store data 32 bits at a time from the data-retention section 403 in synchronization with the restoration clock 52 and sends the store data to the bus 3. The restoration-processing controllers 203A and 203B of the function blocks 20A and 20B detecting the restoration clock 50 sequentially read the data transferred on the bus 3 in synchronization with the restoration clock 50 and write the 16-bit data and the 16-bit data into the data-retention sections 201A and 201 B respectively.

After data restoration completion of the function blocks 20A and 20B, the clock controller 11 stops sending the restoration clock 50 to the function blocks 20A and 20B and immediately afterward, sends a restoration clock 51 to the function blocks 20C and 20D. Although sending the restoration clock 50 to the function blocks 20A and 20B is stopped, sending the restoration clock 52 to the storage section 40 is continued. The store-processing controller 401 of the storage section 40 remains in detection of the restoration clock 52 and thus reads the store data 32 bits at a time from the data-retention section 403 in synchronization with the restoration clock 52 with the read enable signal set to enable and sends the store data to the bus 3. The restoration-processing controllers 203C and 203D of the function blocks 20C and 20D detecting the restoration clock 51 sequentially read the data transferred on the bus 3 in synchronization with the restoration clock 51 and write the 16-bit data and the 16-bit data into the data-retention sections 201C and 201 D respectively.

As described above, according to the data transfer system of the embodiment, if more than one function block for performing data store-processing or data restoration-processing exists and the total number of bits of the store data sent once by each function block exceeds the bit width of the bus 3, data store or data restoration is performed for each function block or for each of some function blocks. If the number of bits sent to the bus 3 by the store-processing controller of each function block or the number of bits read from the bus 3 by the restoration-processing controller is large, data store or data restoration can be performed in sequence for each function block or for each of some function blocks.

### (Fourth embodiment)

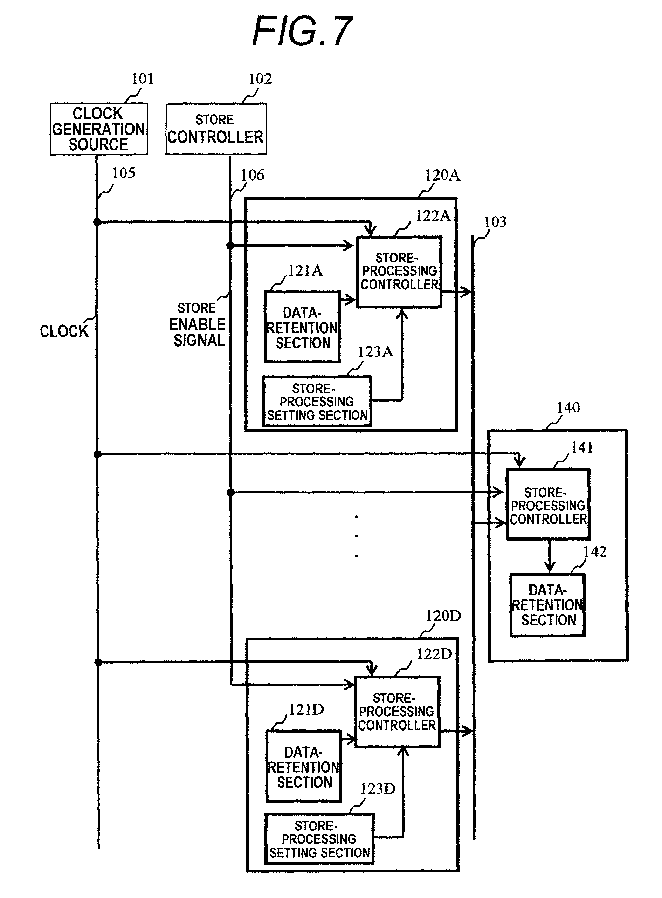

FIG. 7 is a block diagram to show a data store system of a fourth embodiment of the invention. As shown in FIG. 7, a data store system of the fourth embodiment installed on a system LSI includes a clock generation source 101, a store controller 102, function blocks 120A to 120D, a bus 103, and a storage section 140. The function blocks 120A to 120D have data-retention sections 121A to 121D, store-processing controllers 122A to 122D, and store-processing setting sections 123A to 123D. The storage section 140 has a store-processing controller 141 and a data-retention section 142. In the example shown in FIG. 7, the storage section 140 has one data-retention section 142, but may have a plurality of data-retention sections 142.

In the embodiment, the case where the clock generation source 101 and the store controller 102 are used as an example of controller is shown.
The case where the data-retention sections 121A to 121D that the function blocks 120A to 120D have respectively are used as an example of first data-retention section is shown. The case where the store-processing controllers 122A to 122D that the function blocks 120A to 120D have respectively are used as an example of first store-processing controller is shown. The case where the store-processing setting sections 123A to 123D that the function blocks 120A to 120D have respectively are used as an example of bus assignment setting section is shown. The case where the data-retention section 142 that the storage section 140 has is used as an example of second data-retention section is shown. The case where the store-processing controller 141 that the storage section 140 has is used as an example of second store-processing controller is shown.

The clock generation source 101 sends a clock 105 to the function blocks 120A to 120D and the storage section 140 while the system of the embodiment is operating. When data store-processing is performed, the store controller 102 sends a store enable signal 106 to the function blocks 120A to 120D and the storage section 140. In the embodiment, the clock 105 while the store enable signal 106 is output from the store controller 102 is used as an example of store period clock.

Each of the data-retention sections 121A to 121D that the function blocks 120A to 120D have is a record medium of a register, etc. The data-retention sections 121A to 121D store data which needs to be stored in the storage section 140 (which will be hereinafter referred to as "store data") when power supply to the function block which need not operate is shut off. While the store enable signal 106 is sent from the store controller 102, the store-processing controllers 122A to 122D that the function blocks 120A to 120D have read the store data a predetermined number of bits specified from the store-processing setting sections 123A to 123D from the data-retention sections 121A to 121D in synchronization with the clock 105 sent from the clock generation source 101 and send the data to lines of the bus 103 assigned to the function blocks. The store-processing setting sections 123A to 123D that the function blocks 120A to 120D have set bit width assignment of the bus 103 in the store-processing controllers 122A to 122D every clock cycle of the clock 105.

The bus 103 is a data transfer bus connected to the function blocks 120A to 120D and the storage section 140 and having a bit width of 32 bits.

The data-retention section 142 that the storage section 140 has is a nonvolatile record medium. The 32-bit store data sent in sequence from the function blocks 120A to 120D through the bus 103 is stored in the data-retention section 142. While the store enable signal 106 is sent from the store controller 102, the store-processing controller 141 that the storage section 140 has writes the 32-bit store data transferred on the bus 103 into the data-retention section 142 in sequence in synchronization with the clock 105 sent from the clock generation source 101.

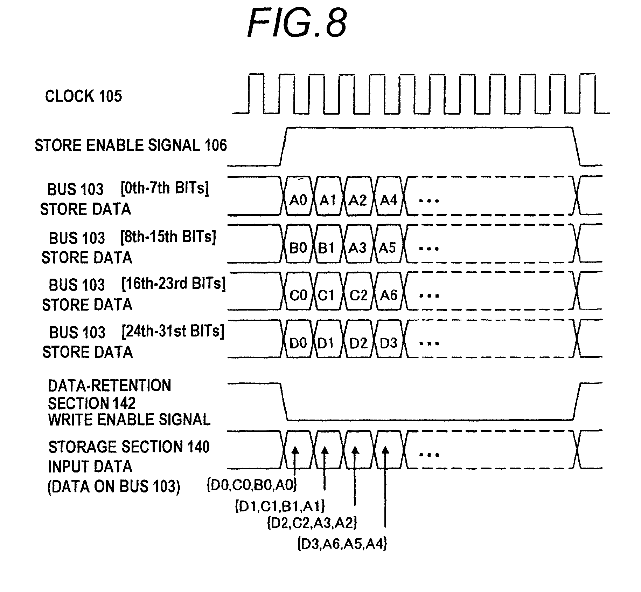

FIG. 8 is a time chart when the data store system of the fourth embodiment performs data store-processing. The data store-processing performed by the data store system of the fourth embodiment will be discussed below: The clock generation source 101 always outputs a clock 105 during the operation of the data store system. When the store controller 102 determines execution of data store-processing, the store controller 102 sends a store enable signal 106 to the function blocks 120A to 120D and the storage section 140.
The store-processing controllers 122A to 122D of the function blocks 120A to 120D detecting the store enable signal 106 read store data as many bits as the number of bits set every clock cycle by the store-processing setting sections 123A to 123D from the data-retention sections 121A to 121 D in synchronization with the clock 105 and send the store data to the bus 103. The store-processing controller 141 of the storage section 140 detecting the store enable signal 106 sets a write enable signal for permitting or prohibiting write into the data-retention section 142 to enable (i.e., permission) and writes the 32-bit store data received in sequence from the bus 103 into the data-retention section 142 in synchronization with the clock 105.

In the example shown in FIG. 8, after the store enable signal 106 is sent, the store-processing setting section 123A makes setting in the store-processing controller 122A so as to assign the 0th to seventh bits of the bus 103 to the function block 120A at the first and second clocks, the 0th to 15th bits of the bus 103 at the third clock, and the 0th to 23rd bits of the bus 103 at the fourth clock and the later. The store-processing setting section 123B makes setting in the store-processing controller 122B so as to assign the eighth to 15th bits of the bus 103 to the function block B at the first and second clocks. The store-processing setting section 123C makes setting in the store-processing controller 122C so as to assign the 16th to 23rd bits of the bus 103 to the function block C at the first to third clocks. The store-processing setting section 123D makes setting in the store-processing controller 122D so as to assign the 24th to 31 st bits of the bus 103 to the function block D at the first clock and the later.

As described above, according to the data store system of the embodiment, the bit width of the bus 103 assigned to each function block in response to the data size of the store data of the function block can be adjusted every clock cycle of the clock 105. Therefore, if the data size of the store data varies from one function block to another, setting can be made so that the time required for data store of the two or more function blocks becomes the shortest.

In the embodiment, each function block is provided with the store-processing setting section and the bit width is set directly for each function block, but the store-processing setting sections of the function blocks may be collected into one provided separately from the function blocks. In this case, bit width setting information described about bit width assignment of the bus 103 every clock cycle is sent from the store-processing setting section common to the function blocks to each of the function blocks.

### (Fifth embodiment)

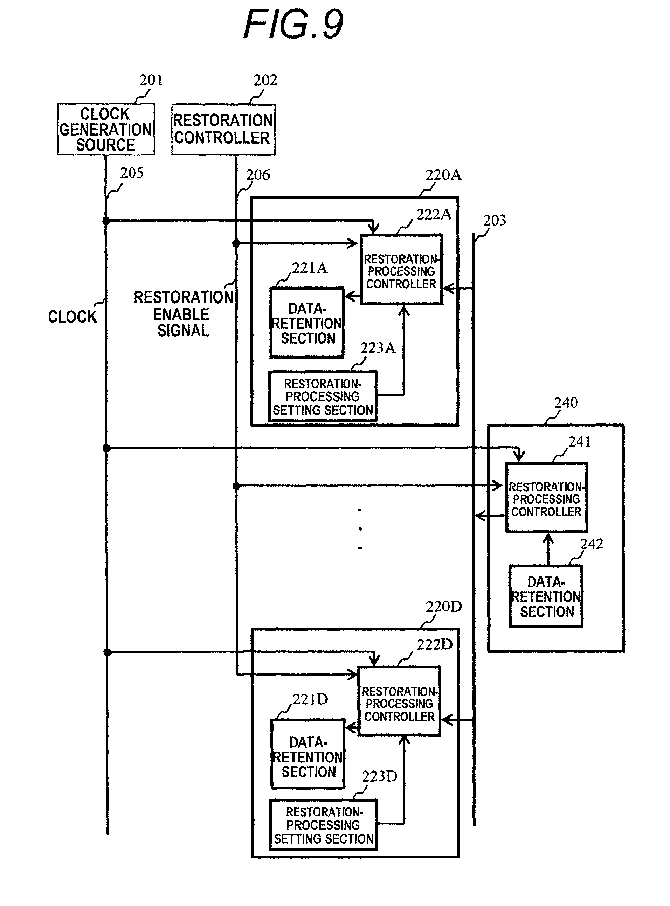

FIG. 9 is a block diagram to show a data restoration system of a fifth embodiment of the invention. As shown in FIG. 9, a data restoration system of the fifth embodiment installed on a system LSI includes a clock generation source 201, a restoration controller 202, function blocks 220A to 220D, a bus 203, and a storage section 240. The function blocks 220A to 220D have data-retention sections 221A to 221D, restoration-processing controllers 222A to 222D, and restoration-processing setting sections 223A to 223D. The storage section 240 has a restoration-processing controller 241 and a data-retention section 242. In the example shown in FIG. 9, the storage section 240 has one data-retention section 242, but may have a plurality of data-retention sections 242.

In the embodiment, the case where the clock generation source 201 and the restoration controller 202 are used as an example of controller is shown. The case where the data-retention sections 221A to 221D that the function blocks 220A to 220D have respectively are used as an example of second data-retention section is shown. The case where the restoration-processing controllers 222A to 222D that the function blocks 220A to 220D have respectively are used as an example of second restoration-processing controller is shown. The case where the restoration-processing setting sections 223A to 223D that the function blocks 120A to 120D have respectively are used as an example of bus assignment setting section is shown. The case where the data-retention section 242 that the storage section 240 has is used as an example of first data-retention section is shown. The case where the restoration-processing controller 241 that the storage section 240 has is used as an example of first restoration-processing controller is shown.

The clock generation source 201 sends a clock 205 to the function blocks 220A to 220D and the storage section 240 while the system of the embodiment is operating. When data restoration-processing is performed, the restoration controller 202 sends a restoration enable signal 206 to the function blocks 220A to 220D and the storage section 240. In the embodiment, the clock 205 while the restoration enable signal 206 is output from the restoration controller 202 is used as an example of restoration period clock.

The data-retention section 242 that the storage section 240 has is a nonvolatile record medium. The data-retention section 242 stores data required for the function blocks 220A to 220D to resume the operation (which will be hereinafter referred to as "restoration data"). While the restoration enable signal 206 is sent from the restoration controller 202, the restoration-processing controller 241 that the storage section 240 has sends the restoration data to lines of the bus 103 assigned to the function blocks in synchronization with the clock 205 sent from the clock generation source 201.

The bus 203 is a data transfer bus connected to the function blocks 220A to 220D and the storage section 240 and having a bit width of 32 bits.

Each of the data-retention sections 221A to 221D that the function blocks 220A to 220D have is a record medium of a register, etc. The data-retention sections 221A to 221D store restoration data sent in sequence from the storage section 240 through the bus 203. While the restoration enable signal 206 is sent from the restoration controller 202, the restoration-processing controllers 222A to 222D that the function blocks 220A to 220D have read the restoration data a predetermined number of bits specified from the restoration-processing setting sections 223A to 223D from the bus 203 in synchronization with the clock 205 sent from the clock generation source 201 and store the data in the data-retention sections 221A to 221D. The restoration-processing setting sections 223A to 223D that the function blocks 220A to 220D have set bit width assignment of the bus 203 in the restoration-processing controllers 222A to 222D every clock cycle of the clock 205.

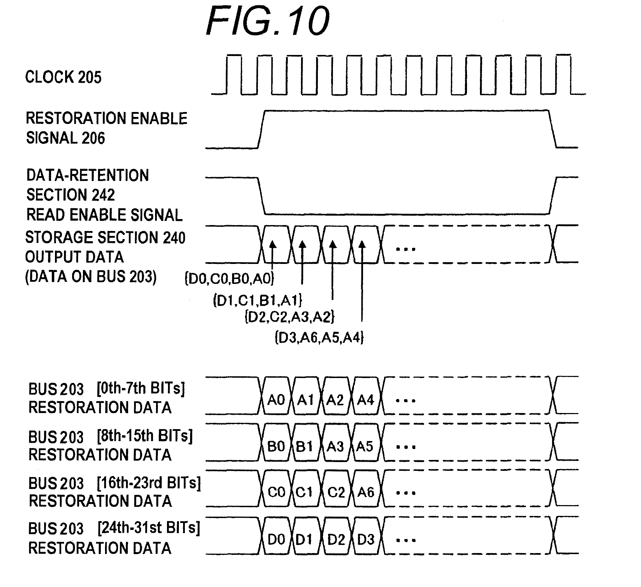

FIG. 10 is a time chart when the data restoration system of the fifth embodiment performs data restoration-processing. The data restoration-processing performed by the data restoration system of the fifth embodiment will be discussed below: The clock generation source 201 always outputs a clock 205 during the operation of the data restoration system. When the restoration controller 202 determines execution of data restoration-processing, the restoration controller 202 sends a restoration enable signal 206 to the function blocks 220A to 220D and the storage section 240. The restoration-processing controller 241 of the storage section 240 detecting the restoration enable signal 206 sets a read enable signal for permitting or prohibiting read from the data-retention section 242 to enable (i.e., permission) and sends the 32-bit restoration data read from the data-retention section 242 to the bus 203 in synchronization with the clock 205. The restoration-processing controllers 222A to 222D of the function blocks 220A to 220D detecting the restoration enable signal 206 sequentially receive restoration data as many bits as the number of bits set every clock cycle by the restoration-processing setting sections 223A to 223D from the bus 203 in synchronization with the clock 205 and store the restoration data in the data-retention sections 221A to 221D.

In the example shown in FIG. 10, after the restoration enable signal 206 is sent, the restoration-processing setting section 223A makes setting in the restoration-processing controller 222A so as to assign the 0th to seventh bits of the bus 203 to the function block 220A at the first and second clocks, the 0th to 15th bits of the bus 203 at the third clock, and the 0th to 23rd bits of the bus 203 at the fourth clock and the later. The restoration-processing setting section 223B makes setting in the restoration-processing controller 222B so as to assign the eighth to 15th bits of the bus 203 to the function block B at the first and second clocks. The restoration-processing setting section 223C makes setting in the restoration-processing controller 222C so as to assign the 16th to 23rd bits of the bus 203 to the function block C at the first to third clocks. The restoration-processing setting section 223D makes setting in the restoration-processing controller 222D so as to assign the 24th to 31st bits of the bus 203 to the function block D at the first clock and the later.

As described above, according to the data restoration system of the embodiment, the bit width of the bus 203 assigned to each function block in response to the data size of the restoration data of the function block can be adjusted every clock cycle of the clock 205. Therefore, if the data size of the restoration data varies from one function block to another, setting can be made so that the time required for data restoration of the two or more function blocks becomes the shortest.

In the embodiment, each function block is provided with the restoration-processing setting section and the bit width is set directly for each function block, but the restoration-processing setting sections of the function blocks may be collected into one provided separately from the function blocks. In this case, bit width setting information described about bit width assignment of the bus 203 every clock cycle is sent from the restoration-processing setting section common to the function blocks to each of the function blocks.

### (Sixth embodiment)

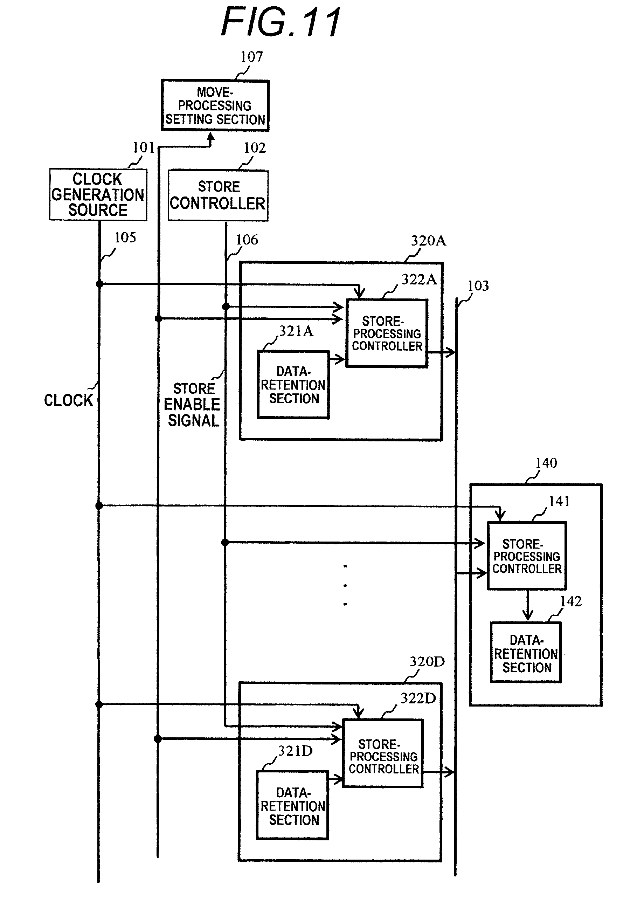

FIG. 11 is a block diagram to show a data store system of a sixth embodiment of the invention. As shown in FIG. 11, a data store system of the sixth embodiment installed on a system LSI includes a clock generation source 101, a store controller 102, a store-processing setting section 107, function blocks 320A to 320D, a bus 103, and a storage section 140. The function blocks 320A to 320D have data-retention sections 321A to 321D and store-processing controllers 322A to 322D. The storage section 140 has a store-processing controller 141 and a data-retention section 142. In the example shown in FIG. 11, the storage section 140 has one data-retention section 142, but may have a plurality of data-retention sections 142.

In the embodiment, the case where the clock generation source 101 and the store controller 102 are used as an example of controller is shown.
The case where the data-retention sections 321A to 321D that the function blocks 320A to 320D have respectively are used as an example of first data-retention section is shown. The case where the store-processing controllers 322A to 322D that the function blocks 320A to 320D have respectively are used as an example of first store-processing controller is shown. The case where the data-retention section 142 that the storage section 140 has is used as an example of second data-retention section is shown. The case where the store-processing controller 141 that the storage section 140 has is used as an example of second store-processing controller is shown.

The clock generation source 101 sends a clock 105 to the function blocks 320A to 320D and the storage section 140 while the system of the embodiment is operating. When data store-processing is performed, the store controller 102 sends a store enable signal 106 to the function blocks 320A to 320D and the storage section 140. In the embodiment, the clock 105 while the store enable signal 106 is output from the store controller 102 is used as an example of store period clock.

Each of the data-retention sections 321A to 321D that the function blocks 320A to 320D have is a record medium of a register, etc. The data-retention sections 321A to 321D store data which needs to be stored in the storage section 140 (which will be hereinafter referred to as "store data") when power supply to the function block which need not operate is shut off. While the store enable signal 106 is sent from the store controller 102, the store-processing controllers 322A to 322D that the function blocks 320A to 320D have read the store data a predetermined number of bits specified from the store-processing setting section 107 from the data-retention sections 321A to 321D in synchronization with the clock 105 sent from the clock generation source 101 and send the data to lines of the bus 103 assigned to the function blocks. Upon completion of sending the store data stored in the data-retention sections 321A to 321D to the bus 103, the store-processing controllers 322A to 322D set each a store completion flag. A signal indicating the state of the store completion flag is sent to the store-processing setting section 107.

The store-processing setting section 107 uniquely manages bit width assignment of the bus 103 to each of the function blocks. The store-processing setting section 107 changes setting of the bit width assignment of the bus 103 for each of the store-processing controllers 322A to 322D of the function blocks 320A to 320D in response to the state of the store completion flag indicated by the signal sent from the each of the function blocks 320A to 320D.

The bus 103 is a data transfer bus connected to the function blocks 320A to 320D and the storage section 140 and having a bit width of 32 bits.

The data-retention section 142 that the storage section 140 has is a nonvolatile record medium. The 32-bit store data sent in sequence from the function blocks 320A to 320D through the bus 103 is stored in the data-retention section 142. While the store enable signal 106 is sent from the store controller 102, the store-processing controller 141 that the storage section 140 has writes the 32-bit store data transferred on the bus 103 into the data-retention section 142 in sequence in synchronization with the clock 105 sent from the clock generation source 101.

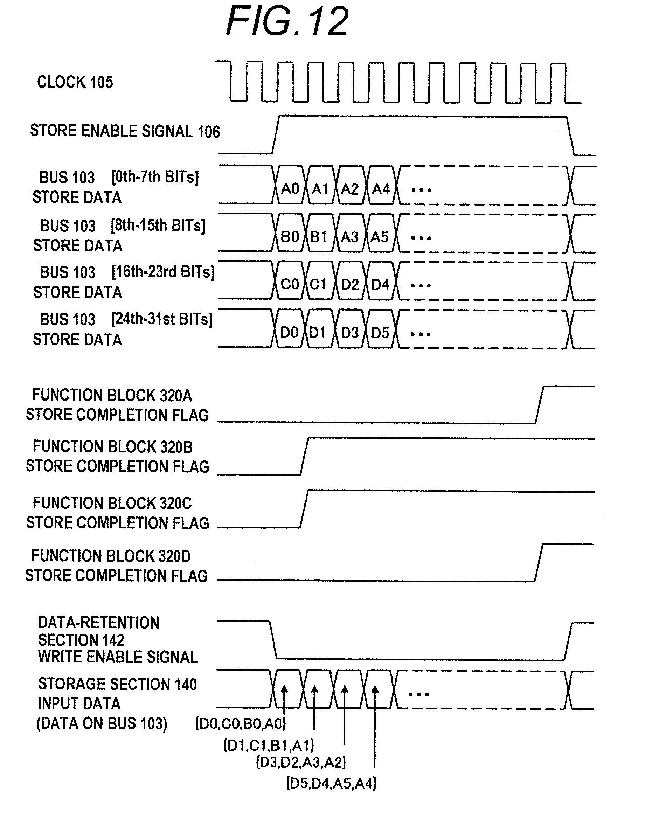

FIG. 12 is a time chart when the data store system of the sixth embodiment performs the data store-processing. The data store-processing performed by the data store system of the sixth embodiment will be discussed below: The clock generation source 101 always outputs a clock 105 during the operation of the data store system. When the store controller 102 determines execution of data store-processing, the store controller 102 sends a store enable signal 106 to the function blocks 320A to 320D and the storage section 140. The store-processing controllers 322A to 322D of the function blocks 320A to 320D detecting the store enable signal 106 read store data as many bits as the number of bits set by the store-processing setting section 107 from the data-retention sections 321A to 321D in synchronization with the clock 105 and send the store data to the bus 103. Upon completion of sending the store data to the bus 103, the store-processing controllers 322A to 322D set each the store completion flag. A signal indicating the state of the store completion flag is sent to the store-processing setting section 107. The store-processing controller 141 of the storage section 140 detecting the store enable signal 106 sets a write enable signal for permitting or prohibiting write into the data-retention section 142 to enable (i.e., permission) and writes the 32-bit store data received in sequence from the bus 103 into the data-retention section 142 in synchronization with the clock 105.

In the embodiment, after the store enable signal 106 is sent, when none of the store completion flags of the function blocks 320A to 320D are set, the store-processing setting section 107 assigns eight bits of the line of the 0th to seventh bits of the bus 103 to the function block 320A, assigns eight bits of the line of the eighth to 15 bits to the function block 320B, assigns eight bits of the line of the 16th to 23rd bits to the function block 320C, and assigns eight bits of the line of the 24th to 31st bits to the function block 320D. The store-processing setting section 107 assigns the line assigned to the function block where store-processing is complete to the function block where store-processing is being performed in response to the state of the store completion flag. In the example shown in FIG. 12, since store data sending of the function block 320B and that of the function block 320C are complete almost at the same time, then the store-processing setting section 107 assigns 16 bits of the line of the 0th to 15th bits of the bus 103 to the function block 320A and assigns 16 bits of the line of the 16th to 32nd bits to the function block 320B.

As described above, according to the data store system of the embodiment, the bit width of the bus 103 assigned to each function block in response to the data size of the store data of the function block can be adjusted in response to the state of the store completion flag. Therefore, if the data size of the store data varies from one function block to another, setting can be made so that the time required for data store of the two or more function blocks becomes the shortest.

### (Seventh embodiment)

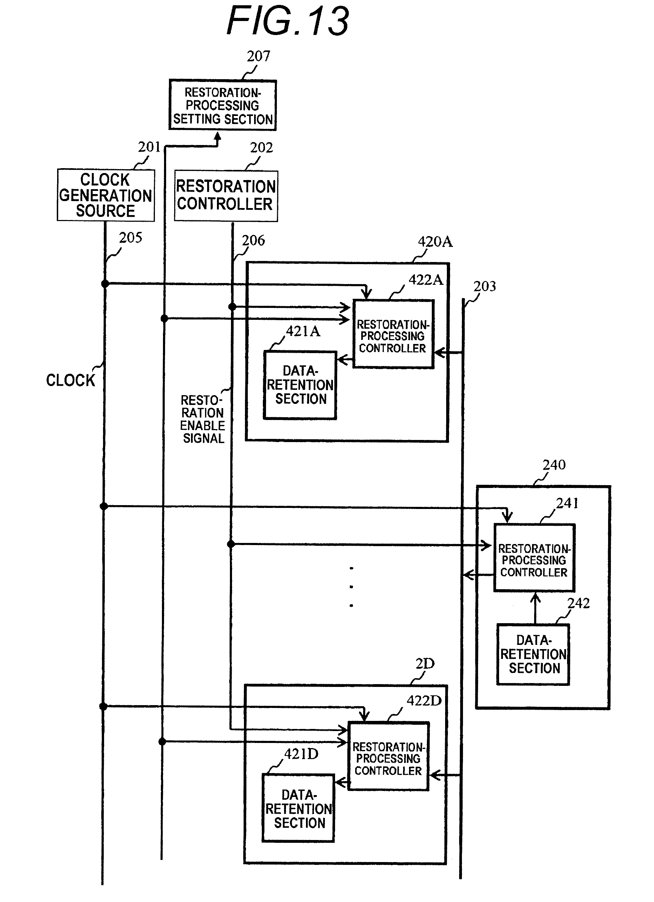

FIG. 13 is a block diagram to show a data restoration system of a seventh embodiment of the invention. As shown in FIG. 13, a data restoration system of the seventh embodiment installed on a system LSI includes a clock generation source 201, a restoration controller 202, a restoration-processing setting section 207, function blocks 420A to 420D, a bus 203, and a storage section 240. The function blocks 420A to 420D have data-retention sections 421A to 421D and restoration-processing controllers 422A to 422D. The storage section 240 has a restoration-processing controller 241 and a data-retention section 242. In the example shown in FIG. 13, the storage section 240 has one data-retention section 242, but may have a plurality of data-retention sections 242.

In the embodiment, the case where the clock generation source 201 and the restoration controller 202 are used as an example of controller is shown. The case where the restoration-processing setting section 207 is used as an example of bus assignment setting section is shown. The case where the data-retention sections 421A to 421D that the function blocks 420A to 420D have respectively are used as an example of second data-retention section is shown. The case where the restoration-processing controllers 422A to 422D that the function blocks 420A to 420D have respectively are used as an example of second restoration-processing controller is shown. The case where the data-retention section 242 that the storage section 240 has is used as an example of first data-retention section is shown. The case where the restoration-processing controller 241 that the storage section 240 has is used as an example of first restoration-processing controller is shown.

The clock generation source 201 sends a clock 205 to the function blocks 420A to 420D and the storage section 240 while the system of the embodiment is operating. When data restoration-processing is performed, the restoration controller 202 sends a restoration enable signal 206 to the function blocks 420A to 420D and the storage section 240. In the embodiment, the clock 205 while the restoration enable signal 206 is output from the restoration controller 202 is used as an example of restoration period clock.

The data-retention section 242 that the storage section 240 has is a nonvolatile record medium. The data-retention section 242 stores data required for resuming the operation of the function blocks 420A to 420D (which will be hereinafter referred to as "restoration data"). While the restoration enable signal 206 is sent from the restoration controller 202, the restoration-processing controller 241 that the storage section 240 has sends the restoration data to the line of the bus 203 assigned to each of the function blocks in synchronization with the clock 205 sent from the clock generation source 201.

The bus 103 is a data transfer bus connected to the function blocks 420A to 420D and the storage section 240 and having a bit width of 32 bits.

Each of the data-retention sections 421A to 421D that the function blocks 420A to 420D have is a record medium of a register, etc. The restoration data sent in sequence from the storage section 240 through the bus 203 is stored in the data-retention sections 421A to 421D. While the restoration enable signal 206 is sent from the restoration controller 202, the restoration-processing controllers 422A to 422D that the function blocks 420A to 420D have read the restoration data a predetermined number of bits specified from the restoration-processing setting section 207 from the bus 203 in synchronization with the clock 205 sent from the clock generation source 201 and store the restoration data in the data-retention sections 421A to 421D.
Upon completion of receiving the restoration data required for restoring the corresponding function block, transferred through the bus 20 from the storage section 240, the restoration-processing controllers 422A to 422D set each a restoration completion flag. A signal indicating the state of the restoration completion flag is sent to the restoration-processing setting section 207.

The restoration-processing setting section 207 uniquely manages bit width assignment of the bus 203 to each of the function blocks. The restoration-processing setting section 207 changes setting of the bit width assignment of the bus 203 for each of the restoration-processing controllers 422A to 422D of the function blocks 420A to 420D in response to the state of the restoration completion flag sent from the each of the function blocks 420A to 420D.

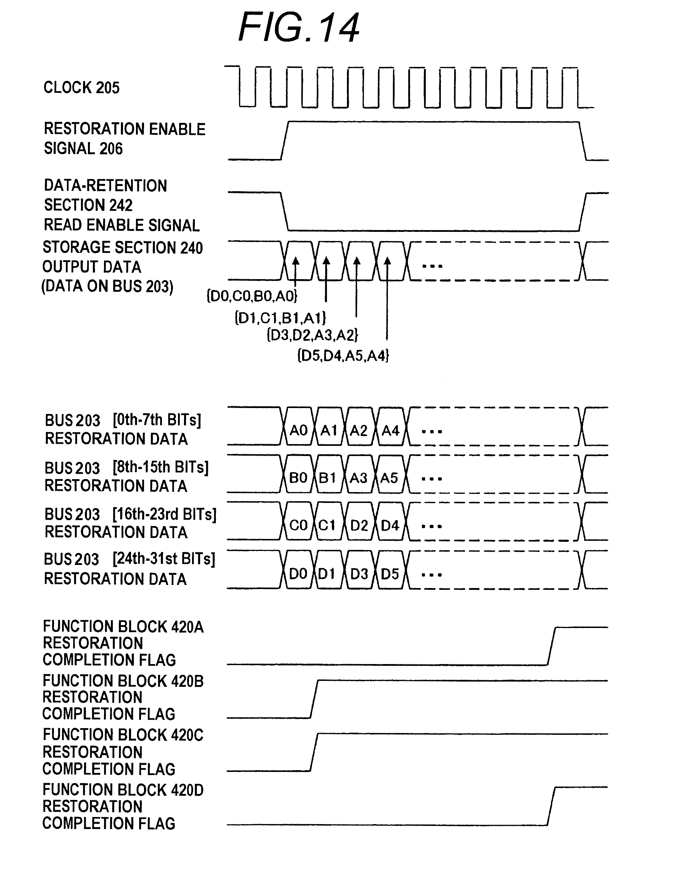

FIG. 14 is a time chart when the data restoration system of the seventh embodiment performs the data restoration-processing. The data restoration-processing performed by the data restoration system of the seventh embodiment will be discussed below: The clock generation source 201 always outputs a clock 205 during the operation of the data restoration system. When the restoration controller 202 determines execution of data restoration-processing, the restoration controller 202 sends a restoration enable signal 206 to the function blocks 420A to 420D and the storage section 240. The restoration-processing controller 241 of the storage section 240 detecting the restoration enable signal 206 sets a write enable signal for permitting or prohibiting read from the data-retention section 242 to enable (i.e., permission) and sends the 32-bit restoration data read from the data-retention section 242 to the bus 203 in synchronization with the clock 205. The restoration-processing controllers 422A to 422D of the function blocks 420A to 420D detecting the restoration enable signal 206 receive restoration data as many bits as the number of bits set by the restoration-processing setting section 207 from the bus 203 in sequence in synchronization with the clock 205 and store the restoration data in the data-retention sections 421A to 421D. Upon completion of receiving the restoration data, the restoration-processing controllers 422A to 422D set each the restoration completion flag.

In the embodiment, after the restoration enable signal 206 is sent, when none of the restoration completion flags of the function blocks 420A to 420D are set, the restoration-processing setting section 207 assigns eight bits of the line of the 0th to seventh bits of the bus 3 to the function block 420A, assigns eight bits of the line of the eighth to 15 bits to the function block 420B, assigns eight bits of the line of the 16th to 23rd bits to the function block 420C, and assigns eight bits of the line of the 24th to 31 st bits to the function block 420D. The restoration-processing setting section 207 assigns the line assigned to the function block where restoration-processing is complete to the function block where restoration-processing is being performed in response to the state of the restoration completion flag. In the example shown in FIG. 14, since restoration data receiving of the function block 420B and that of the function block 420C are complete almost at the same time, then the restoration-processing setting section 207 assigns 16 bits of the line of the 0th to 15th bits of the bus 3 to the function block 420A and assigns 16 bits of the line of the 16th to 32nd bits to the function block 420B.

As described above, according to the data restoration system of the embodiment, the bit width of the bus 203 assigned to each function block in response to the data size of the restoration data of the function block can be adjusted in response to the state of the restoration completion flag. Therefore, if the data size of the restoration data varies from one function block to another, setting can be made so that the time required for data restoration of the two or more function blocks becomes the shortest.

The invention has been described in detail with reference to the specific embodiments, it will be obvious to those skilled in the art that various changes and modifications can be made without departing from the spirit and the scope of the invention.

This application is based on Japanese Patent Application (No. 2007-103955) filed on April 11, 2007, which is incorporated herein by reference.

### Industrial Applicability

The data store system and the data restoration system according to the invention are useful as a power saving system, etc., of a system LSI, etc., for decreasing power consumption by shutting off and restoring power supply to function blocks.

## Claims

1. A data store system, comprising:
at least one function block having store data to be stored;
a storage section for storing the store data transferred from the function block;
a bus having a bit width of a predetermined number of bits where the function block and the storage section are connected; and
a controller for sending a store period clock to the function block and the storage section when the store data is to be transferred from the function block to the storage section,
wherein the function block includes:
a first data-retention section for retaining the store data; and
a first store-processing controller for reading the store data a predetermined number of bits at a time within the bit width of the bus from the first data-retention section in synchronization with the store period clock, and sending the read store data to a line of the bus assigned to each function block, and
wherein the storage section includes:
a second data-retention section for retaining the store data transferred from the function block through the bus; and
a second store-processing controller for reading the store data from the bus in synchronization with the store period clock, and storing the read store data in the second data-retention section.

2. The data store system as claimed in claim 1, comprising:
a bus assignment setting section for setting, for each function block, the predetermined number of bits of the store data sent to the bus every clock cycle of the store period clock.

3. The data store system as claimed in claim 2,
wherein the first store-processing controller sends a signal indicating a state of a store completion flag that indicates whether or not sending of the store data read from the first data-retention section to the bus is complete to the bus assignment setting section, and
wherein the bus assignment setting section sets the predetermined number of bits of the store data sent to the bus for each function block in response to the state of the store completion flag indicated by the signal sent from the first store-processing controller of the function block.

4. The data store system as claimed in claim 1,
wherein the function block includes a bus assignment setting section for setting in the first store-processing controller, the predetermined number of bits of the store data sent to the bus every clock cycle of the store period clock.

5. The data store system as claimed in claim 1,
wherein the data store system comprises a plurality of the function blocks,
wherein the plurality of function blocks are classified into a plurality of groups, and
wherein the controller sends the store period clock so that sending times do not overlap with each other, at a different timing for each group of the plurality of function blocks.

6. A data restoration system, comprising:
at least one function block;
a storage section for storing restoration data required for the function block to resume the operation;
a bus having a bit width of a predetermined number of bits where the function block and the storage section are connected; and
a controller for sending a restoration period clock to the function block and the storage section when the restoration data stored in the storage section is to be transferred to the function block,
wherein the storage section includes:
a first data-retention section for retaining the restoration data; and
a first restoration-processing controller for reading the restoration data from the first data-retention section in synchronization with the restoration period clock, and sending the read restoration data to a line of the bus assigned to each function block, and
wherein the function block includes:
a second data-retention section for retaining the restoration data transferred from the storage section through the bus; and
a second restoration-processing controller for reading the restoration data a predetermined number of bits at a time from a predetermined line of the bus assigned to each function block in synchronization with the restoration period clock, and storing the read restoration data in the second data-retention section.

7. The data restoration system as claimed in claim 6, comprising:
a bus assignment setting section for setting, for each function block, the predetermined number of bits of the restoration data read from the bus every clock cycle of the restoration period clock.

8. The data restoration system as claimed in claim 7,
wherein the bus assignment setting section sets the predetermined number of bits of the restoration data read from the bus for each function block every clock cycle of the restoration period clock.

9. The data restoration system as claimed in claim 7,
wherein the second restoration-processing controller sends a signal indicating a state of a restoration completion flag that indicates whether or not receiving of the restoration data transferred from the storage section through the bus is complete to the bus assignment setting section, and
wherein the bus assignment setting section sets the predetermined number of bits of the restoration data read from the bus for each function block in response to the state of the restoration completion flag indicated by the signal sent from the second restoration-processing controller of the function block.

10. The data restoration system as claimed in claim 6,
wherein the function block includes a bus assignment setting section for setting in the second restoration-processing controller, the predetermined number of bits of the restoration data read from the bus every clock cycle of the restoration period clock.

11. The data restoration system as claimed in claim 6,
wherein the data restoration system comprises a plurality of the function blocks,
wherein the plurality of function blocks are classified into a plurality of groups, and
wherein the controller sends the restoration period clock so that read times do not overlap with each other, at a different timing for each group of the plurality of function blocks.

12. A data store method performed by a data store system comprising:
at least one function block having store data to be stored;
a storage section for storing the store data transferred from the function block;
a bus having a bit width of a predetermined number of bits where the function block and the storage section are connected; and
a controller for sending a store period clock to the function block and the storage section when the store data is to be transferred from the function block to the storage section,
wherein the data store method comprises:
sending by the controller the store period clock to the function block and the storage section,
sending by the function block the store data a predetermined number of bits at a time within the bit width of the bus to a line of the bus assigned to each function block in synchronization with the store period clock, and
reading by the storage section the store data from the bus in synchronization with the store period clock, and storing the read store data.

13. A data restoration method performed by a data restoration system comprising:
at least one function block;
a storage section for storing restoration data required for the function block to resume the operation;
a bus having a bit width of a predetermined number of bits where the function block and the storage section are connected; and
a controller for sending a restoration period clock to the function block and the storage section when the restoration data stored in the storage section is to be transferred to the function block,
wherein the data restoration method comprises:
sending by the controller the restoration period clock to the function block and the storage section,
sending by the storage section the restoration data to a line of the bus assigned to each function block in synchronization with the restoration period clock, and
reading by the function block the restoration data a predetermined number of bits at a time from a predetermined line of the bus assigned to each function block in synchronization with the restoration period clock, and storing the read restoration data.
